# EUROPEAN PATENT SPECIFICATION

(11) **EP 3 104 006 B1**
(45) Date of publication and mention of the grant of the patent: **29.12.2021**
(21) Application number: 16154340.0
(22) Date of filing: 04.02.2016
(51) Int. Cl.: F04B 1/0408, F04B 1/0426, F04B 1/053, F04B 1/122, F03D 9/28, F03D 15/00, F04B 17/02, F03C 1/28, F03C 1/04

(54) **HYDRAULIC MACHINE AND POWER GENERATING APPARATUS OF RENEWABLE ENERGY TYPE**
HYDRAULISCHE MASCHINE UND VORRICHTUNG ZUR ERZEUGUNG VON STROM AUS ERNEUERBARER ENERGIE
MACHINE HYDRAULIQUE ET APPAREIL DE GÉNÉRATION DE PUISSANCE DE TYPE À ÉNERGIE RENOUVELABLE

(30) Priority: 11.06.2015 JP 2015118535
(43) Date of publication of application: 14.12.2016
(73) Proprietor: Mitsubishi Heavy Industries, Ltd., Tokyo 108-8215 (JP)
(72) Inventor: Uchida, Michiya, Tokyo, 108-8215 (JP); Hitomi, Haruki, Tokyo, 108-8215 (JP); Ochiai, Hiroyasu, Tokyo, 108-8215 (JP); Nishida, Hideaki, Tokyo, 108-8215 (JP); Yuge, Atsushi, Tokyo, 108-8215 (JP)
(74) Representative: Henkel & Partner mbB

(56) References cited:
- EP-A1- 2 796 714
- WO-A1-2014/002142
- WO-A1-2014/087119
- WO-A1-2014/087201

## Description

### TECHNICAL FIELD

The present disclosure relates to a hydraulic machine and a power generating apparatus of renewable-energy type.

### BACKGROUND ART

A known hydraulic machine of piston type is configured to convert a mode of motion between reciprocating motion of a piston in a cylinder and rotational motion of a rotation shaft via a cam mechanism.

For instance, WO 2014/087201 A (on which the preamble portion of claim 1 is based) and WO 2014/087119 A1 describe a hydraulic machine including an eccentric cam, a plurality of pistons and cylinders disposed around the eccentric cam, and connecting rods engaged with the pistons at one end and contacting the eccentric cam at the other end.

In this hydraulic machine, power is transmitted between the eccentric cam and the pistons via the connecting rods, so that each piston reciprocates inside the corresponding cylinder along the radial direction of the eccentric cam in accordance with rotation of the eccentric cam.

Further, in this hydraulic machine, the end of each connecting rod contacting the eccentric cam has a pad shape. To mitigate friction that may occur between the connecting rod and the eccentric cam, the contact surface between the pad-shaped end (contact portion) and the eccentric cam is supplied with working fluid from a working chamber, and the working fluid forms a fluid film on the contact surface.

WO 2014/002142 A1 and EP 2796714 A1 disclose a hydraulic machine comprising a rotation shaft, a cam, a cylinder, a piston, a connection rod, a hydrostatic pad and a lubricant-fluid supply channel. The cylinder is disposed radially outside of the rotation shaft. The piston is integrally formed with the connection rod and is configured to be moved inside the cylinder. An end portion of the connection rod is in contact with a roller being in contact with the cam. The hydrostatic pad is disposed on the end portion of the connection rod. The lubricant-fluid supply channel is configured to supply lubricant fluid to the hydrostatic pad to provide a liquid film between the roller and the hydrostatic pad.

### SUMMARY

As a result of intensive researches conducted by the present inventors, it was found that, in the hydraulic machine having the above configuration, the position at which the thickness of the fluid film reaches its minimum and the magnitude of the minimum value of the thickness of the fluid film (minimum fluid-film thickness) may vary in accordance with the phase of the piston, within a period during which the pressure in the working chamber is high. Specifically, while the piston moves between the top dead center and the bottom dead center, a hydrostatic pad (pad-shaped contact portion of the connecting rod) slightly tilts due to swing of the connecting rod, and the position at which the liquid film (fluid film) reaches its minimum changes (for instance, changes from the end of the hydrostatic pad in the circumferential direction to the center of the hydrostatic pad), in accordance of which the value of the minimum liquid-film thickness itself may considerably change. Further, the present inventors found that the correlation between the phase of the piston and the minimum liquid-film thickness depends greatly upon a friction coefficient between the piston and the connecting rod.

On the other hand, a hydrostatic pad having a great load capacity may deform elastically due to a great static pressure.

Accordingly, the present inventors found that, in a period during which the pressure in the working chamber is high, it may be difficult to secure a sufficient minimum liquid-film thickness with respect to the amount of elastic deformation of the hydrostatic pad depending on the phase of the piston and the friction coefficient between the piston and the connecting rod. If a sufficient minimum liquid-film thickness cannot be secured with respect to the amount of elastic deformation of the hydrostatic pad, the hydrostatic pad or the cam may get damage such as seizure.

In this regard, WO 2014/087201 A does not describe securing a sufficient minimum liquid-film thickness with respect to the elastic deformation of the hydrostatic pad taking account of a change in the phase of the piston or the coefficient friction between the piston and the connecting rod.

In view of the above issue, an object of at least one embodiment of the present invention is to provide a hydraulic machine whereby it is possible to reduce a risk of damage to a hydrostatic pad or a cam.

(1) A hydraulic machine according to the present invention comprises the features of claim 1 including: a rotation shaft; a cam configured to rotate with the rotation shaft; a cylinder disposed radially inside or outside the rotation shaft; a piston configured to be reciprocable in the cylinder along a radial direction of the rotation shaft in conjunction with rotational motion of the cam; a connecting rod including a first end portion connected swingably to the piston and a second end portion disposed opposite to the first end portion; a hydrostatic pad disposed on the second end portion of the connecting rod, the hydrostatic pad including a sliding surface facing an outer surface of the cam; and a lubricant-fluid supply channel disposed on the hydrostatic pad, for supplying a lubricant fluid to the sliding surface of the hydrostatic pad. The hydraulic machine is configured so that a pressure in a working chamber formed by the piston and the cylinder changes cyclically and alternately between a first pressure P₁ and a second pressure P₂ larger than the first pressure P₁, in accordance with reciprocating motion of the piston. The hydrostatic pad is configured to retain a liquid film of the lubricant fluid having a thickness of d or more between the sliding surface and the outer surface of the cam at least when the pressure in the working chamber is the second pressure P₂. Herein, "d" is the amount of deformation of the hydrostatic pad at the time when the pressure in the working chamber is the second pressure P₂.

In the above configuration (1), when the pressure in the working chamber is the second pressure P₂ and the amount of deformation of the hydrostatic pad is the maximum (that is, d), the oil-film thickness is greater than the amount d of deformation of the hydrostatic pad. Thus, regardless of the phase of the piston (i.e., even in a period during which the pressure in the working chamber is high), or even when the friction coefficient between the piston and the connecting rod is large to some extent, it is possible to secure a sufficient liquid-film thickness with respect to the amount of deformation of the hydrostatic pad. Thus, with the above configuration (1), it is possible to reduce a risk of occurrence of damage to the hydrostatic pad or the cam by securing a sufficient liquid-film thickness with respect to the amount of deformation of the hydrostatic pad.

(2) In some embodiments, in the above configuration (1), the sliding surface of the hydrostatic pad has a substantially rectangular shape in a planar view.

With the above configuration (2), since the sliding surface of the hydrostatic pad has a substantially rectangular shape, it is possible to increase the area of the sliding surface as compared to a case where the sliding surface does not have a substantially rectangular shape (e.g. a rectangular shape chamfered at four corner portions). Thus, the lubricant fluid is less likely to flow out from the sliding surface and it is easier to maintain the liquid film on the sliding surface, which makes it possible to further reduce the risk of damage to the hydrostatic pad or the eccentric cam.

(3) In some embodiments, in the above configuration (1) or (2), the lubricant-fluid supply channel includes a first inner channel disposed inside the piston and being in communication with the working chamber and a second inner channel disposed inside the connecting rod and the hydrostatic pad and being in communication with the first inner channel and the sliding surface.

With the above configuration (3), it is possible to supply the working fluid inside the working chamber to the sliding surface of the hydrostatic pad as a lubricant fluid, via the first inner channel disposed inside the piston and the second inner channel disposed inside the connecting rod and the hydrostatic pad. In this case, a high-pressure working fluid is supplied to the sliding surface depending on the phase of the piston, which may increase the amount of deformation of the hydrostatic pad in this period.

Thus, if the hydraulic machine has the above configuration (3) in which the working fluid in the working chamber is supplied to the sliding surface of the hydrostatic pad, it is especially advantageous to secure a sufficient liquid-film thickness with respect to the amount of deformation of the hydrostatic pad with the above configuration (1).

(4) In some embodiments, in any of the above configurations (1) to (3), the hydraulic machine further comprises at least one orifice disposed in the lubricant-fluid supply channel.

With the above configuration (4), it is possible to adjust the amount of lubricant fluid drawn onto the sliding surface by the orifice, which makes it easier to maintain a liquid film having a suitable thickness on the sliding surface.

(5) In some embodiments, in any of the above configurations (1) to (4), the hydrostatic pad includes a hydrostatic pocket disposed on the sliding surface and configured to store the lubricant fluid.

With the above configuration (5), the hydrostatic pocket disposed on the sliding surface can store the lubricant fluid, and the lubricant fluid stored in the hydrostatic pocket via the lubricant-fluid supply channel is spread over the sliding surface around the hydrostatic pocket. In this way, it is possible to supply the sliding surface with the lubricant fluid efficiently, and to form a liquid film on the sliding surface efficiently.

(6) In some embodiments, in the above configuration (5), a width of the hydrostatic pad in an axial direction of the rotation shaft is constant at least in an extending region of the hydrostatic pocket in a circumferential direction of the rotation shaft.

With the above configuration (6), the width of the hydrostatic pad in the axial direction of the rotation shaft is constant at least in the extending region of the hydrostatic pocket in the circumferential direction of the rotation shaft, which makes it possible to secure a large area of the sliding surface excluding an area occupied by the hydrostatic pocket, as compared to a case where the width of the hydrostatic pad is smaller than the constant width in a part of the extending region of the hydrostatic pocket. In this way, it is easier to keep the lubricant fluid trapped inside the hydrostatic pocket, and the lubricant fluid is less likely to flow out from the sliding surface. Thus, it is easier to maintain the liquid film on the sliding surface, which makes it possible to reduce the risk of damage to the hydrostatic pad or the cam.

(7) In some embodiments, in the above configuration (5) or (6), a relationship represented by W_{pad}/Wₚₒₖₑₜ≥ 1.5 is satisfied, where W_{pad} is a width of the hydrostatic pad in the circumferential direction of the rotation shaft, and W_{pocket} is a width of the hydrostatic pocket in the circumferential direction.

With the above configuration (7), the width of the hydrostatic pad in the circumferential direction of the rotation shaft is sufficiently greater than the width of the hydrostatic pocket, which makes it possible to secure a large area of the sliding surface excluding an area occupied by the hydrostatic pocket, as compared to a case where the width of the hydrostatic pad is not sufficiently greater than the width of the hydrostatic pocket. In this way, it is easier to keep the lubricant fluid trapped inside the hydrostatic pocket, and the lubricant fluid is less likely to flow out from the sliding surface. Thus, it is easier to maintain the liquid film on the sliding surface, which makes it possible to reduce the risk of damage to the hydrostatic pad or the cam.

(8) In some embodiments, in any of the above configurations (5) to (7), the hydrostatic pocket is disposed in the middle of the sliding surface, and an area S₁ of the sliding surface excluding an area occupied by the hydrostatic pocket is equal to or greater than an area S₂ of the hydrostatic pocket.

With the above configuration (8), the hydrostatic pocket is disposed in the middle of the sliding surface, and the area S1 of the sliding surface excluding the area occupied by the hydrostatic pocket is at least the area S2 of the hydrostatic pocket, which makes it possible to secure a sufficiently large area of the sliding surface excluding an area occupied by the hydrostatic pocket, and to secure a sufficiently larger width of the hydrostatic pad than the width of the hydrostatic pocket. In this way, it is easier to keep the lubricant fluid trapped inside the hydrostatic pocket, and the lubricant fluid is less likely to flow out from the sliding surface. Thus, it is easier to maintain the liquid film on the sliding surface, which makes it possible to reduce the risk of damage to the hydrostatic pad or the cam.

(9) In some embodiments, in any of the above configurations (5) to (9), the hydrostatic pocket is formed so that a depth of the hydrostatic pocket changes in a stepped pattern along a rotational direction of the cam.

With the above configuration (9), since the depth of the hydrostatic pocket changes in a stepped pattern along the circumferential direction of the cam, it is possible to form the hydrostatic pocket while maintaining a high stiffness of the hydrostatic pad.

(10) In some embodiments, in any of the above configurations (1) to (9), a relationship represented by 0.001 ≤ G/D ≤ 0.003 is satisfied, where D is a maximum outside diameter of the piston and G is a minimum gap between an outer circumferential surface of the piston and an inner circumferential surface of the cylinder in a radial direction of the cylinder.

With the above configuration (10), the gap between the piston and the cylinder satisfies the above relationship, which makes it possible to prevent contact between the piston and the wall surface of the cylinder even if the piston expands due to heat during operation of the hydraulic machine. In this way, it is possible to prevent damage to the piston or the wall surface of the cylinder due to contact.

(11) In some embodiments, in any of the above configurations (1) to (10), the outer circumferential surface of the piston has a surface having a crowned form from an end portion on the side of the working chamber to an end portion on the side of the cam.

With the above configuration (11), even if the piston tilts in accordance with the tilt of the connecting rod, it is possible to reduce the risk that the outer circumferential surface of the piston contacts the wall surface of the cylinder. In this way, it is possible to prevent damage to the piston or the wall surface of the cylinder due to contact.

(12) In some embodiments, in any of the above configurations (1) to (11), one of the piston or the connecting rod includes a ball-shaped end portion, the other one of the piston or the connecting rod includes a ball-shaped recess portion engageable with the ball-shaped end portion, and a surface of at least one of the ball-shaped end portion or the ball-shaped recess portion is covered with a solid lubricant.

With the above configuration (12), since the surface of the at least one of the ball-shaped end portion or the ball-shaped recess portion is covered with a solid lubricant, it is possible to reduce friction that may occur at the engagement part between the ball-shaped end portion and the ball-shaped recess portion. In this way, it is possible to reduce a side load applied to the hydrostatic pad, which makes it possible to further reduce the risk of damage due to friction of the hydrostatic pad or the cam.

(13) A power generating apparatus of renewable energy type according to at least one embodiment of the present invention comprises: a rotor configured to receive renewable energy to rotate; a hydraulic pump configured be driven by the rotor to pressurize a working oil; a hydraulic motor configured to be driven by the working oil; and a generator configured to be driven by the hydraulic motor. At least one of the hydraulic pump or the hydraulic motor comprises the hydraulic machine according to any one of the above (1) to (12).

In the above configuration (13), when the pressure in the working chamber is the second pressure P₂ and the amount of deformation of the hydrostatic pad is the maximum (that is, d), the oil-film thickness is greater than the amount d of deformation of the hydrostatic pad. Thus, regardless of the phase of the piston (i.e., even in a period during which the pressure in the working chamber is high), or even when the friction coefficient between the piston and the connecting rod is large to some extent, it is possible to secure a sufficient liquid-film thickness with respect to the amount of deformation of the hydrostatic pad. Thus, with the above configuration (12), it is possible to reduce a risk of occurrence of damage to the hydrostatic pad or the cam by securing a sufficient liquid-film thickness with respect to the amount of deformation of the hydrostatic pad.

(14) In some embodiments, in the above configuration (13), the power generating apparatus of renewable energy type is a wind turbine power generating apparatus configured to generate electric power utilizing wind energy as the renewable energy.

In the above configuration (14), when the pressure in the working chamber is the second pressure P₂ and the amount of deformation of the hydrostatic pad is the maximum (that is, d), the oil-film thickness is greater than the amount d of deformation of the hydrostatic pad. Thus, regardless of the phase of the piston (i.e., even in a period during which the pressure in the working chamber is high), or even when the friction coefficient between the piston and the connecting rod is large to some extent, it is possible to secure a sufficient liquid-film thickness with respect to the amount of deformation of the hydrostatic pad. Thus, with the above configuration (14), it is possible to reduce a risk of occurrence of damage to the hydrostatic pad or the cam by securing a sufficient liquid-film thickness with respect to the amount of deformation of the hydrostatic pad.

According to at least one embodiment of the present invention, a hydraulic machine whereby it is possible to reduce a risk of damage to a hydrostatic pad or a cam is provided.

### BRIEF DESCRIPTION OF DRAWINGS

FIG 1 is a configuration diagram of a wind turbine power generating apparatus according to one embodiment.
FIG. 2 is a configuration diagram of a hydraulic motor (hydraulic machine) according to one embodiment.
FIG. 3A is a diagram illustrating a structure of a piston 18 and a connecting rod 20 from outside in the radial direction of an eccentric cam 17. FIG. 3B is a cross-sectional view of the same taken along the radial direction of the eccentric cam 17. FIG. 3C is a diagram of the same illustrated from the direction of the rotational axis of the eccentric cam 17.
FIG 4 is a diagram illustrating engagement of the piston and the connecting rod according to one embodiment.
FIG. 5 is a diagram illustrating a sliding part between a hydrostatic pad 25 and the eccentric cam 17 according to one embodiment.
FIG. 6A is a view of the hydrostatic pad according to one embodiment, as seen from inside in the radial direction of the eccentric cam.
FIG 6B is a view of the hydrostatic pad according to one embodiment, as seen in the axial direction of the eccentric cam.
FIG. 7A is a view of the hydrostatic pad according to one embodiment, as seen from inside in the radial direction of the eccentric cam.
FIG. 7B is a view of the hydrostatic pad according to one embodiment, as seen in the axial direction of the eccentric cam.
FIG. 8A is a view of a conventional hydrostatic pad, as seen from inside in the radial direction of the eccentric cam.
FIG. 8B is a view of a conventional hydrostatic pad, as seen in the axial direction of the eccentric cam.
FIG. 9 is a graph showing an example of a change in the minimum oil-film thickness of lubricant liquid formed between a sliding surface of the hydrostatic pad and an outer surface of the eccentric cam during one revolution of the rotation shaft.
FIG. 10 is a diagram illustrating a positional relationship between a piston and a cylinder in a hydraulic motor according to one embodiment.

### DETAILED DESCRIPTION

Embodiments of the present invention will now be described in detail with reference to the accompanying drawings.

In the following embodiment, a wind turbine power generating apparatus will be described as an example of a power generating apparatus of renewable energy type to which a hydraulic machine is applied. However, application of the hydraulic machine of the present invention may be other power generating apparatuses of renewable energy type such as a tidal current generator, an ocean current generator, and a river current generator, for instance, or may be other apparatuses such as a construction machine, the application not being limited particularly.

Further, while the following embodiments are of a hydraulic machine mainly including an outward cam, the hydraulic machine may include an inward cam, in case of which the embodiments of the present invention include configurations obtained by reading opposite from the following description with regard to the directions. Further, while the cam mainly rotates in the following examples, the cam may be fixed and the cylinders and pistons may rotate.

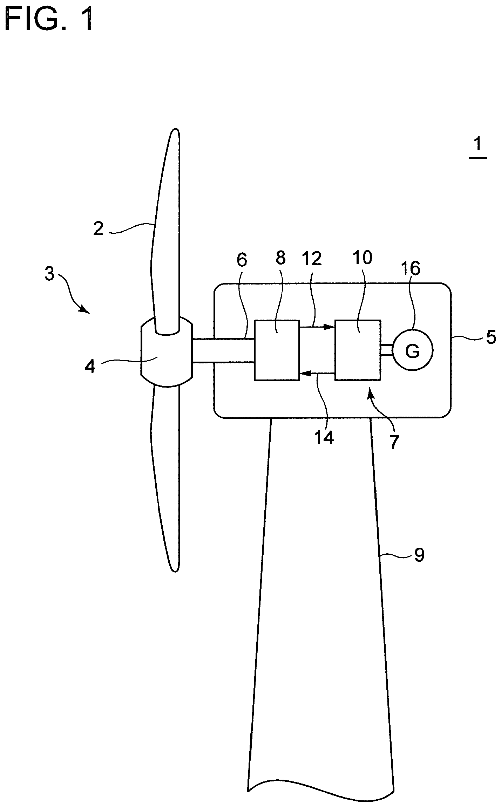

FIG. 1 is a configuration diagram of a wind turbine power generating apparatus according to one embodiment. As illustrated in the drawing, the wind turbine power generating apparatus 1 includes a rotor 3 configured to receive wind energy to rotate, a generator 16 for generating electric power, and a hydraulic transmission 7 for transmitting rotation of the rotor 3 to the generator 16. The rotor 3 includes at least one blade 2, and a hub 4 to which the at least one blade 2 is mounted.

The hydraulic transmission 7 includes a hydraulic pump 8 connected to the rotor 3 via a rotation shaft 6, a hydraulic motor 10, a high-pressure line 12 connecting an outlet of the hydraulic pump 8 and an inlet of the hydraulic motor 10, and a low-pressure line connecting an inlet of the hydraulic pump 8 and an outlet the hydraulic motor 10.

The generator 16 is coupled to the hydraulic motor 10 via an output shaft of the hydraulic motor 10. In one embodiment, the generator 16 is a synchronous generator connected to a utility grid and driven by the hydraulic motor 10.

The hydraulic pump 8, the hydraulic motor 10, and the generator 16 may be disposed inside a nacelle 5 mounted on a tower 9.

In the wind turbine power generating apparatus 1 illustrated in FIG. 1, the rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates by the power of the wind, so that the hydraulic pump 8 is driven by the rotor 3 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of a variable-displacement type whereby the displacement is adjustable.

Next, as an example of the hydraulic machine, the hydraulic motor 10 constituting the hydraulic transmission 7 of the above wind turbine power generating apparatus 1 will be described. However, a hydraulic machine according to the present invention is not limited to the example herein, and may be a hydraulic pump or a hydraulic motor applied to a certain usage.

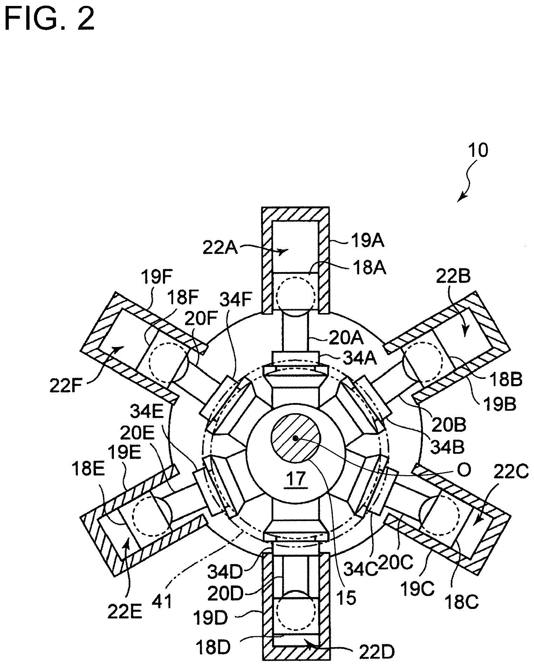

FIG. 2 is a configuration diagram of a hydraulic motor (hydraulic machine) according to one embodiment. As illustrated in the drawing, the hydraulic motor 10 includes a rotation shaft 15, and a cam (eccentric cam) 17 that rotates with the rotation shaft 15. The hydraulic motor 10 further includes cylinders 19A to 19F, pistons 18A to 18F, and connecting rods 20A to 20F disposed radially outside the rotation shaft 15.

The cam 17 illustrated in FIG. 2 is an eccentric cam disposed eccentrically from the axial center O of the rotation shaft 15. While the pistons 18A to 18F perform a set of upward and downward movement, the eccentric cam 17 and the rotation shaft 15 to which the eccentric cam 17 is mounted perform one revolution.

The pistons 18A to 18F form the working chambers 22A to 22F together with the cylinders 19A to 19F, respectively, and reciprocate inside the respective cylinders 19A to 19F along the radial direction of the rotation shaft 15 in conjunction with the rotational motion of the eccentric cam 17. Though not illustrated in FIG. 2, the high-pressure line 12 and the low-pressure line 14 are connected to each of the working chambers 22A to 22F, and thereby the working oil, which is a working fluid, is supplied and discharged via a valve mechanism (not illustrated).

Each of the connecting rods 20A to 20F is connected swingably to corresponding one of the pistons 18A to 18F at the first end portion 51, so as to transmit the reciprocating motion of the corresponding one of the pistons 18A to 18F to the eccentric cam 17.

The pistons 18A to 18F, the cylinders 19A to 19F, and the connecting rods 20A to 20F are disposed in a radial fashion around the eccentric cam 17. The pistons 18A to 18F are caused to reciprocate at phases varied from one another by the working oil in the working chambers 22A to 22F and the eccentric cam 17.

Specifically, when each of the pistons 18A to 18F moves from the top dead center toward the bottom dead center, the working oil introduced from the high-pressure line 12 to corresponding one of the working chambers 22A to 22F pushes each of the pistons 18A to 18F along the cylinder axis down toward the eccentric cam 17. At this time, the eccentric cam 17 is pressed by the connecting rods 20A to 20F corresponding to the respective pistons 18A to 18F, and thereby the eccentric cam 17 rotates. When the eccentric cam 17 rotates, the pistons 18A to 18F positioned in the vicinity of the bottom dead center are pushed up by the eccentric cam 17 via the connecting rods 20A to 20F, so that the working oil in the working chambers 22 A to 22F is discharged to the low-pressure line 14.

The cyclic reciprocating motion of the pistons 18A to 18F causes the rotation shaft of the generator 16 connected to the eccentric cam 17 to rotate.

As described above, when each of the pistons 18A to 18F moves from the top dead center toward the bottom dead center, corresponding one of the working chambers 22A to 22F is in communication with the high-pressure line 12. Thus, the pressure P₂ (the second pressure) in the corresponding one of the working chambers 22A to 22F at this time is substantially equal to the pressure inside the high-pressure line 12. Further, when each of the pistons 18A to 18F is pushed up by rotation of the eccentric cam 17 to move from the bottom dead center toward the top dead center, corresponding one of the working chambers 22A to 22F is in communication with the low-pressure line 14. Thus, the pressure P₁ (the first pressure) in the corresponding one of the working chambers 22A to 22F at this time is substantially equal to the pressure inside the low-pressure line 14.

As described above, the pressure of each of the working chambers 22A to 22F formed by the pistons 18A to 18F and the cylinders 19A to 19F changes cyclically and alternately between first pressure P₁ and the second pressure P₂, which is higher than the first pressure P₁, in accordance with the reciprocating motion of the pistons 18A to 18F.

In the following description, the pistons 18A to 18F are collectively referred to as "piston 18", the cylinders 19A to 19F as "cylinder 19", the connecting rods 20A to 20F as "connecting rod 20", and the working chambers 22A to 22F as "working chamber 22".

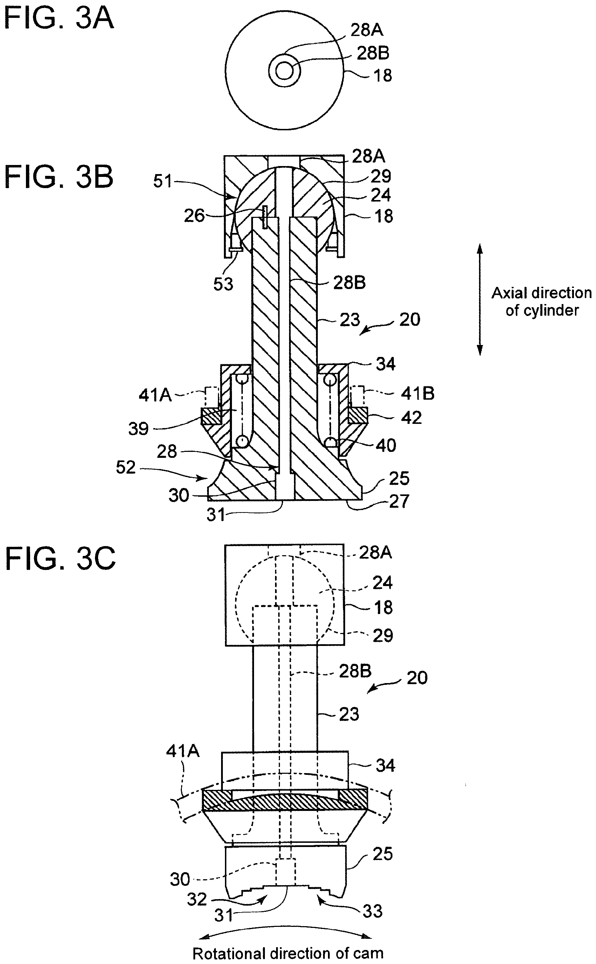

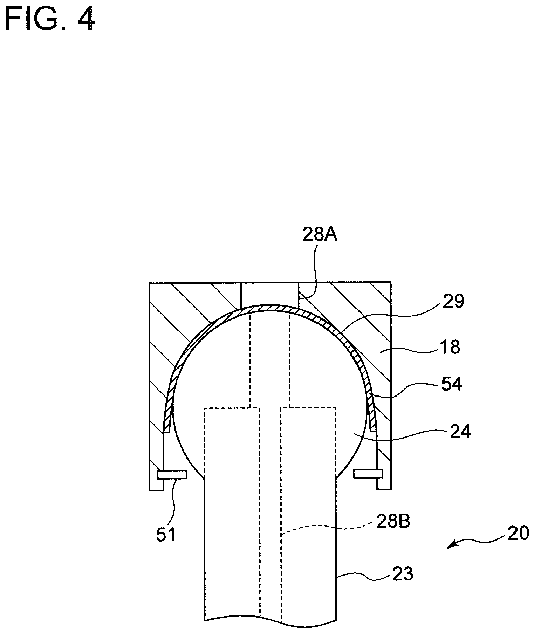

FIG 3A is a diagram illustrating a structure of the piston 18 and the connecting rod 20 from outside in the radial direction of an eccentric cam 17. FIG 3B is a cross-sectional view of the same taken along the radial direction of the eccentric cam 17. FIG. 3C is a diagram of the same illustrated from the direction of the rotational axis of the eccentric cam 17. FIG. 4 is a diagram illustrating engagement of the piston and the connecting rod according to one embodiment.

The connecting rod 20 includes a body portion 23 extending along the axial direction of the cylinder 19 and is connected swingably to the piston 18 at an engagement portion 24 formed on the first end portion 51 at the outer side in the radial direction of the eccentric cam 17, the engagement portion 24 extending along the axial direction of the cylinder 19. Further, a hydrostatic pad 25 is disposed on the second end portion 52 (an end on the inner side in the radial direction of the eccentric cam 17) opposite to the first end portion 51 of the connecting rod 20. The hydrostatic pad 25 includes a sliding surface 27 which faces the outer surface of the eccentric cam 17. The body portion 23 extends substantially parallel to the radial direction of the eccentric cam 17, and transmits the reciprocating motion or the piston 18 to the eccentric cam 17.

The engagement portion 24 has a function of engaging the body portion 23 with the piston 18. The engagement portion 24 is retained in the piston 18 by a fixing pin 53 from the inner side in the radial direction of the eccentric cam 17. In one embodiment, the engagement portion 24 is a ball-shaped end portion having a ball shape, and a ball-shaped recess portion 29 is formed on the piston 18, so that the ball-shaped recess portion 29 engages with the engagement portion 24, which is a ball-shaped end portion, an angle between the connecting rod 20 and the axial direction of the cylinder being variable.

In the embodiment illustrated in FIG. 3, the surface of the ball-shaped recess portion 29 is covered with a solid lubricant 54 as illustrated in FIG. 4. In this way, it is possible to reduce friction that may occur at where the ball-shaped end portion (engagement portion 24) engages with the ball-shaped recess portion 29.

In one embodiment, the surface of the ball-shaped end portion (engagement portion 24) may be covered with the solid lubricant 54. Alternatively, in one embodiment, the surfaces of both of the ball-shaped end portion (engagement portion 24) and the ball-shaped recess portion 29 may be covered with the solid lubricant 54. In this way, it is possible to reduce friction that may occur at where the ball-shaped end portion (engagement portion 24) engages with the ball-shaped recess portion 29.

The hydrostatic pad 25 converts the reciprocating motion of the piston 18 into the rotational motion of the eccentric cam 17 by contacting the eccentric cam 17. In one embodiment, the hydrostatic pad 25 is formed to have a diameter larger than that of the body portion 23. In this way, it is possible to transmit the pressing force from the eccentric cam 17 toward the piston 18 uniformly via the connecting rod 20.

In the example illustrated in FIG. 3, the body portion 23 and the hydrostatic pad 25 are formed as a single piece, and fixed to the engagement portion 24 being a separate member by a bolt 26. Alternatively, the body portion 23 and the hydrostatic pad 25 may be formed as separate members, or the engagement portion 24 and the body portion 23 may be formed as a single piece.

The connecting rod 20 illustrated in FIG. 3 includes a retention member 34 (34A to 34F in FIG. 2) surrounding a part of the body portion 23 of the connecting rod 20 in the circumferential direction of the cylinder 19, and retention rings 41A, 41B disposed radially outside the retention member 34 in the radial direction of the eccentric cam 17 so as to retain the retention member 34 from outside. Further, in an annular space 39 formed between the retention member 34 and the body portion 23 of the connecting rod 20, a pressing-up member 40 (e.g. a spring member) to press the retention member 34 up outwardly in the radial direction of the eccentric cam 17 is disposed.

In the above described connecting rod 20, the retention member 34 is pressed up outwardly in the radial direction of the eccentric cam 17 by the pressing-up member 40, while being retained by the retention rings 41A, 41B from the outer side in the radial direction of the eccentric cam 17. Thus, the connecting rod 20 is forced against the eccentric cam 17 by a reactive force applied by the pressing-up member 40. As described above, maintaining the contact between the eccentric cam 17 and the connecting rod 20 by a suitable pressing force makes it possible to prevent the connecting rod 20 from separating from the eccentric cam 17 and to reduce the wear between the connecting rod 20 and the eccentric cam 17.

In the example illustrated in FIG. 3, a sliding member 42 is disposed between the retention ring 41 and the retention member 34. With the sliding member 42 disposed between the retention ring 41 and the retention member 34, it is possible to reduce wear which may occur between the same.

The hydrostatic pad 25 includes a lubricant-fluid supply channel 28 for supplying a lubricant fluid to the sliding surface 27 of the hydrostatic pad 25. Since the lubricant fluid is supplied from the lubricant-fluid supply channel 28 to the sliding surface 27, a liquid film of the lubricant fluid is formed on the sliding surface 27 between the hydrostatic pad 25 and the surface of the eccentric cam 17, which makes it possible to support the piston 18 and the connecting rod 20 to the eccentric cam 17 via the liquid film in a state of not contacting the eccentric cam 17. Further, since the piston 18 and the connecting rod 20 are supported without contact via the liquid film of the lubricant fluid, the piston 18 and the connecting rod 20 are allowed to tilt relatively to the eccentric cam 17.

In the embodiment illustrated in FIG. 3, the lubricant-fluid supply channel 28 includes the first inner channel 28A disposed inside the piston 18 and being in communication with the working chamber 22 (see FIG. 2) and the second inner channel 28B disposed inside the connecting rod 20 and the hydrostatic pad 25 and being in communication with the first inner channel 28A and the sliding surface 27.

In this case, it is possible to supply the working fluid inside the working chamber 22 to the sliding surface 27 of the hydrostatic pad 25 as a lubricant fluid, via the first inner channel 28A disposed inside the piston 18 and the second inner channel 28B disposed inside the connecting rod 20 and the hydrostatic pad 25.

As illustrated in FIG. 3, the lubricant-fluid supply channel 28 may include an orifice 30 for adjusting the amount of lubricant fluid drawn onto the sliding surface 27. Adjusting the amount of lubricant fluid drawn onto the sliding surface 27 by the orifice 30 makes it easy to maintain a liquid film having a suitable thickness on the sliding surface 27.

In the embodiment illustrated in FIG. 3, the orifice 30 is disposed in the second inner channel 28B disposed inside the connecting rod 20 and the hydrostatic pad 25. In one embodiment, the orifice 30 may be disposed in the first inner channel 28A disposed inside the piston 18.

As illustrated in FIG. 3, the hydrostatic pad 25 includes a hydrostatic pocket 32 disposed on the sliding surface 27 and configured to store the lubricant fluid. The hydrostatic pocket 32 disposed on the sliding surface 27 can store the lubricant fluid, and the lubricant fluid stored in the hydrostatic pocket 32 via the lubricant-fluid supply channel 28 is spread over the sliding surface 27 around the hydrostatic pocket 32. In this way, it is possible to supply the sliding surface 27 with the lubricant fluid efficiently, and to form a liquid film on the sliding surface 27 efficiently.

In the example illustrated in FIG. 3, an opening 31 is formed on the sliding surface 27, and the lubricant fluid is introduced to the hydrostatic pocket 32 from the second inner channel 28B via the opening 31.

Further, as illustrated in FIG. 3, the hydrostatic pocket 32 includes a staircase portion 33 formed so that the depth of the hydrostatic pocket 32 changes in a stepped pattern along the rotational direction of the eccentric cam 17. With such a staircase portion 33, it is possible to form the hydrostatic pocket 32 while maintaining a high stiffness of the hydrostatic pad 25.

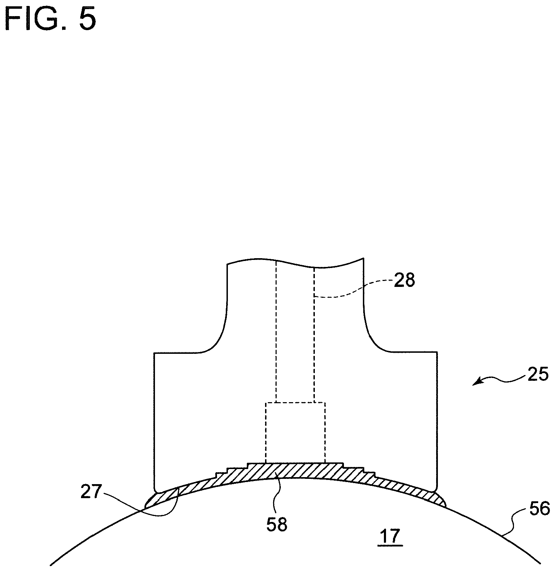

As illustrated in FIG. 5, a liquid film 58 of the lubricant fluid is formed between the sliding surface of the hydrostatic pad 25 with the above configuration and the outer surface 56 of the eccentric cam 17. FIG. 5 is a diagram illustrating a sliding part between a hydrostatic pad 25 and the eccentric cam 17 according to one embodiment.

The hydrostatic pad 25 according to the invention is configured such that the liquid film 58 of the lubricant fluid having a thickness of d or more is retained between the outer surface 56 of the eccentric cam 17 and the sliding surface 27, at least when the pressure inside the working chamber 22 is the second pressure P₂ (i.e., in a period during which the piston 18 is moving from the top dead center to the bottom dead center and the working chamber 22 is in communication with the high-pressure line 12). Herein, "d" is the amount of deformation of the hydrostatic pad 25 at the time when the pressure in the working chamber 22 is the second pressure P₂.

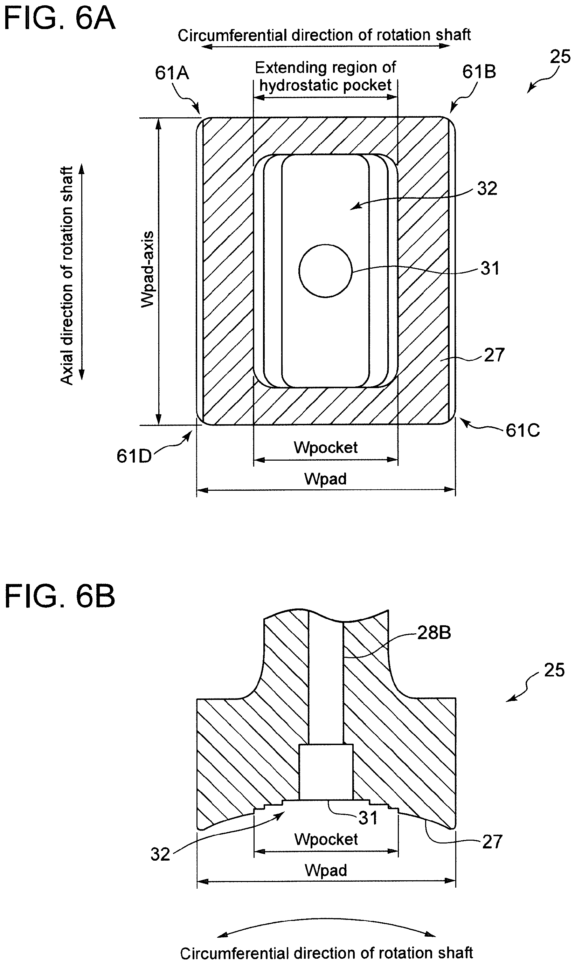

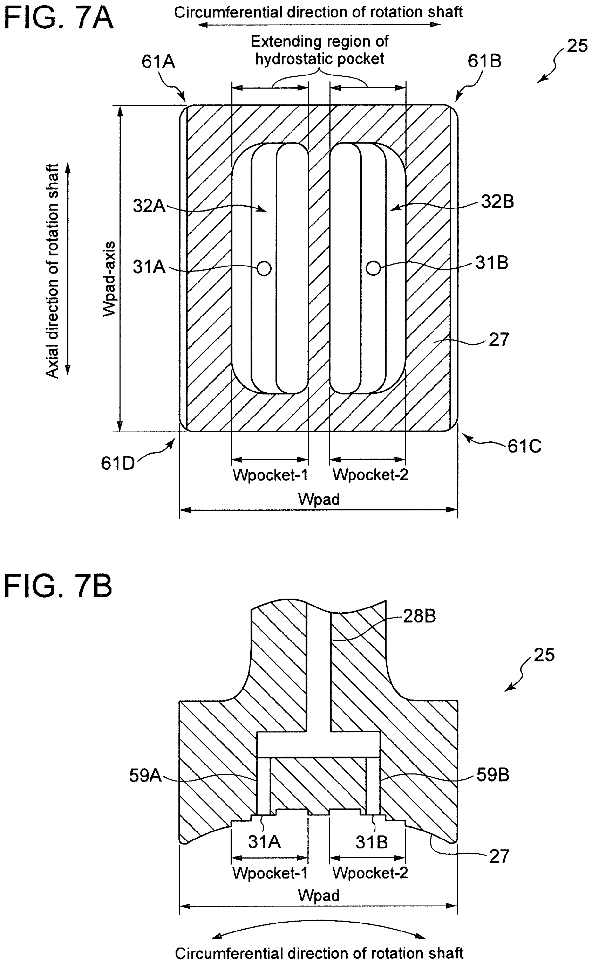

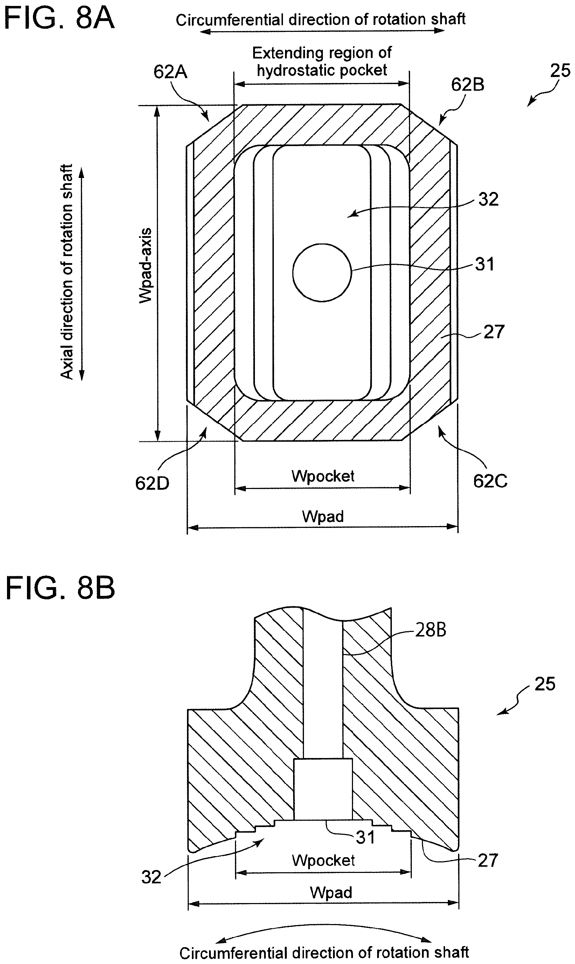

With reference to FIGs. 6 to 8, the configuration of the hydrostatic pad 25 according to some embodiments will be described. FIGs. 6A and 7A are each a view of the hydrostatic pad according to one embodiment, as seen from inside in the radial direction of the eccentric cam. FIGs. 6B and 7B are each a view of the hydrostatic pad according to one embodiment, as seen in the axial direction of the eccentric cam. FIG. 8A is a view of a conventional hydrostatic pad, as seen from inside in the radial direction of the eccentric cam. FIG. 8B is a view of a conventional hydrostatic pad, as seen in the axial direction of the eccentric cam.

FIGs. 6A and 6B illustrate the hydrostatic pad 25 illustrated in FIG. 3.

FIGs. 7A and 7B illustrate the hydrostatic pad 25 according to another embodiment. In the embodiment illustrated in FIGs. 7A and 7B, two hydrostatic pockets 32A, 32B are formed on the sliding surface 27. The second inner channel 28B includes bypass channels 59A, 59B communicating with the hydrostatic pockets 32A, 32B, respectively, as illustrated in FIGs. 7A and 7B. The working oil in the working chamber 22 is supplied as a lubricant fluid to each of the hydrostatic pockets 32A, 32B via the second inner channel 28B including the bypass channels 59A, 59B.

In the embodiments illustrated in FIGs. 6A to 7B, the sliding surface 27 of the hydrostatic pad 25 has a substantially rectangular shape in a planar view (i.e. as seen in the radial direction of the eccentric cam; see FIGs. 6A and 7A).

Specifically, while the conventional hydrostatic pad 25 illustrated in FIG. 8 has a shape chamfered at the four corner portions 62A to 62D, the hydrostatic pad 25 in the embodiments illustrated in FIGs. 6A to 7B is not chamfered greatly at the four corner portions 61A to 61D, but has a shape close to a rectangular in a planar view.

In this way, it is possible to provide the sliding surface 27 with an area larger than that of the conventional hydrostatic pad 25 having a rectangular shape chamfered at four corner portions in a planar view as in FIG. 8. Thus, the lubricant fluid is less likely to flow out from the sliding surface 27, which makes it possible to maintain the liquid film 58 on the sliding surface 27. Thus, it is possible to reduce the risk of damage to the hydrostatic pad 25 or the eccentric cam 17.

In some embodiments, the width of the hydrostatic pad 25 in the axial direction of the rotation shaft 15 is constant at least in the extending region of the hydrostatic pocket 32 in the circumferential direction of the rotation shaft 15. For instance in the embodiments illustrated in FIGs. 6A to 7B, the width of the hydrostatic pad 25 in the axial direction of the rotation shaft 15 is constant at W_{pad_axis} at least in the extending region (region R_{pocket} in the drawings) of the hydrostatic pocket 32 in the circumferential direction of the rotation shaft 15.

On the other hand, the conventional hydrostatic pad 25 illustrated in FIG. 8 is chamfered greatly at the corner portions (62A to 62D) in a planar view, and the width of the hydrostatic pad 25 is smaller than W_{pad_axis} in a part of the extending region (region R_{pocket} in the drawings) of the hydrostatic pocket 32. As a result, an area of the sliding surface 27 excluding an area occupied by the hydrostatic pocket 32 is relatively small.

Accordingly, if the width of the hydrostatic pad 25 in the axial direction of the rotation shaft 15 is constant in the extending region of the hydrostatic pocket 32 in the circumferential direction of the rotation shaft 15 as in the embodiments illustrated in FIGs. 6A to 7B, it is possible to secure a large area of the sliding surface 27 excluding an area occupied by the hydrostatic pocket 32 (i.e., the shaded area in FIG. 6A or 7A), as compared to a case where the width of the hydrostatic pad 25 is smaller than the constant width in a part of the extending region of the hydrostatic pocket as illustrated in FIG. 8. In this way, it is easier to keep the lubricant fluid trapped inside the hydrostatic pocket 32, and the lubricant fluid is less likely to flow out from the sliding surface 27. Thus, it is easier to maintain the liquid film on the sliding surface 27, which makes it possible to reduce the risk of damage to the hydrostatic pad 25 or the eccentric cam 17.

In some embodiments, a relationship represented by W_{pad}/W_{pocket} ≥ 1.5 is satisfied, where W_{pad} is the width of the hydrostatic pad 25 in the circumferential direction of the rotation shaft 15, and the W_{pocket} is the width of the hydrostatic pocket 32 in the circumferential direction of the rotation shaft 15.

For instance, in the embodiments illustrated in FIGs. 6A to 7B, the relationship represented by W_{pad}/W_{pocket} ≥ 1.5 is satisfied. In a case where a plurality of hydrostatic pockets 32 is disposed on the sliding surface 27 of the hydrostatic pad 25, W_{pad} is a sum of the respective widths of the plurality of hydrostatic pockets 32. For instance, in the embodiment illustrated in FIGs. 7A and 7B, the widths of the two hydrostatic pockets 32A, 32B are W_{pocket_1} and W_{pocket_2}, respectively, and the sum of the same is W_{pad} (W_{pad} = W_{pocket_1} +W_{pocket_2}).

In this case, it is possible to secure a large area of the sliding surface 27 excluding an area occupied by the hydrostatic pocket 32 (i.e., the shaded area in FIG. 6A or 7A), as compared to a case where the width of the hydrostatic pad 25 is not sufficiently greater than the width of the hydrostatic pocket 32. In this way, it is easier to keep the lubricant fluid trapped inside the hydrostatic pocket 32, and the lubricant fluid is less likely to flow out from the sliding surface. Thus, it is easier to maintain the liquid film on the sliding surface, which makes it possible to reduce the risk of damage to the hydrostatic pad 25 or the eccentric cam 17.

In some embodiments, as illustrated in FIGs. 6A and 6B, the hydrostatic pocket 32 is disposed in the middle of the sliding surface 27, and the area S₁ of the sliding surface 27 excluding an area occupied by the hydrostatic pocket 32 (i.e., the shaded area in FIG. 6A) is equal to or greater than the area S₂ of the hydrostatic pocket 32.

In this case, it is possible to provide the hydrostatic pad 25 with a width sufficiently greater than the width of the hydrostatic pocket 32, and to secure a sufficiently large area of the sliding surface 27 excluding an area occupied by the hydrostatic pocket 32 (i.e., the shaded area in FIG. 6A). In this way, it is easier to keep the lubricant fluid trapped inside the hydrostatic pocket 32, and the lubricant fluid is less likely to flow out from the sliding surface 27. Thus, it is easier to maintain the liquid film on the sliding surface 27, which makes it possible to reduce the risk of damage to the hydrostatic pad 25 or the eccentric cam 17.

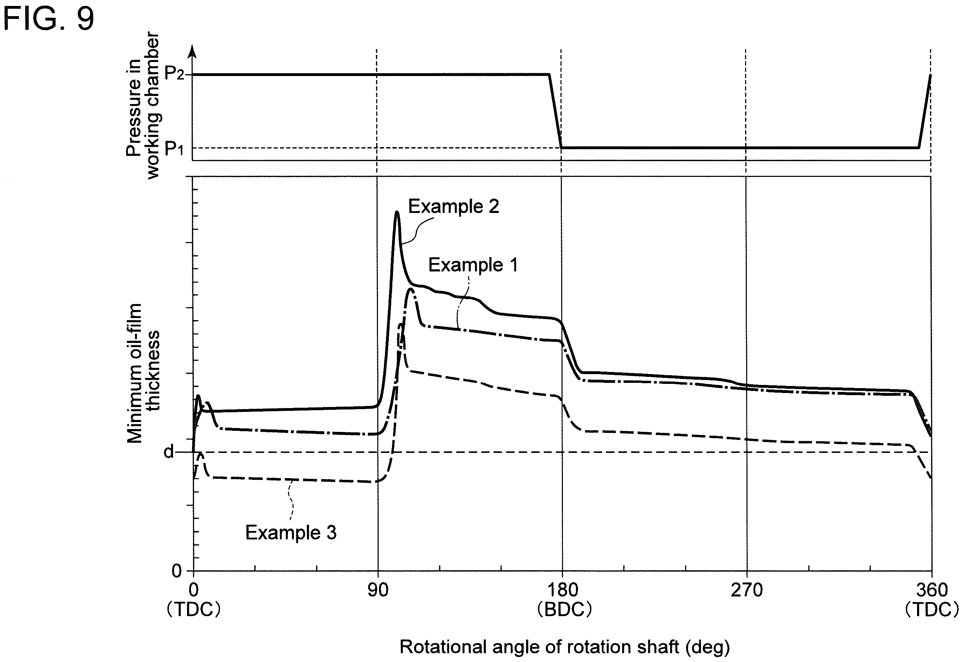

FIG. 9 is a graph showing a change in the minimum oil-film thickness of lubricant liquid (working oil) formed between the sliding surface 27 of the hydrostatic pad 25 and the outer surface 56 of the eccentric cam 17 during one revolution of the rotation shaft 15, i.e., during a period from when the piston 18 starts moving downward from the top dead center to when the piston 18 returns to the top dead center after passing through the bottom dead center. In this graph, example 1 represents a result of using the hydrostatic pad 25 according to the embodiment illustrated in FIGs. 6A and 6B, example 2 a result of using the hydrostatic pad 25 according to the embodiment illustrated in FIGs. 7A and 7B, and example 3 a result of using the conventional hydrostatic pad 25 illustrated in FIG. 8. In examples 1 to 3, the friction coefficient between the piston and the connecting rod is the same.

Further, FIG. 9 also illustrates a change in the pressure in the working chamber 22 during one revolution of the rotation shaft 15.

As a result of intensive researches conducted by the present inventors, it was found that, in a hydraulic machine, the position at which the thickness of a fluid film reaches its minimum and the magnitude of the minimum value of the thickness of the fluid film (minimum fluid-film thickness) may vary in accordance with the phase of the piston, within a period during which the pressure in the working chamber is high.

Specifically, while the piston moves between the top dead center and the bottom dead center, the hydrostatic pad slightly tilts due to swinging of the connecting rod, and the position at which the liquid film (oil film) reaches its minimum changes. For instance, the position at which the oil-film thickness reaches its minimum changes from the end of the hydrostatic pad in the circumferential direction to the center of the hydrostatic pad.

In accordance of the change in the position at which the oil-film thickness reaches its minimum, the value of the minimum liquid-film thickness itself may considerably change. For instance, in the graph of FIG. 9, the minimum oil-film thickness considerably changes immediately after the rotational angle of the rotation shaft 15 reaches 90°. It can be considered that, since the tendency of a change in the tilting angle of the hydrostatic pad 25 turns into a decreasing tendency from an increasing tendency when the rotational angle of the rotation shaft 15 is approximately 90°, the minimum oil-film thickness considerably changes accordingly.

Further, the present inventors found that the correlation between the phase of the piston and the minimum liquid-film thickness depends greatly upon a friction coefficient between the piston and the connecting rod.

For instance, if the solid lubricant 54 covering the ball-shaped recess portion 29 illustrated in FIG. 4 separates, the friction coefficient between the piston 18 and the connecting rod 20 increases, and friction that occurs at where the ball-shaped end portion (engagement portion 24) of the connecting rod 20 engages with the ball-shaped recess portion 29 of the piston 18 increases.

When the friction coefficient between the piston and the connecting rod increases to some extent, the minimum oil-film thickness tends to be relatively small when the rotational angle of the rotation shaft 15 is approximately 0 to 90°, as shown in the graph of FIG. 9.

On the other hand, a hydrostatic pad having a great load capacity may deform elastically due to a great static pressure, and for instance, may deform in a direction of the oil-film thickness at a position in the circumferential direction of the cam.

Thus, in a period during which the pressure in the working chamber is high (e.g. in a period during which the piston 18 moves downward from the top dead center to the bottom dead center), it may be difficult to secure a sufficient minimum liquid-film thickness with respect to the amount of elastic deformation of the hydrostatic pad 25 depending on the phase of the piston 18 and the friction coefficient between the piston 18 and the connecting rod 20.

In the example 1 illustrated in FIG. 9 (corresponding to the embodiment illustrated in FIG. 6) and the example 2 (corresponding to the embodiment illustrated in FIG. 7), the pressure in the working chamber 22 is the second pressure P₂, which is relatively high, so that the oil-film thickness is greater than the amount d of deformation of the hydrostatic pad 25 when the amount of deformation of the hydrostatic pad 25 is at its maximum (which is d). Thus, regardless of the phase of the piston 18 (i.e., even in a period during which the pressure in the working chamber 22 is high), or even when the friction coefficient between the piston 18 and the connecting rod 20 is large to some extent, it is possible to secure a sufficient oil-film thickness with respect to the amount of deformation of the hydrostatic pad 25. In this way, it is possible to reduce the risk of occurrence of damage to the hydrostatic pad 25 or the eccentric cam 17.

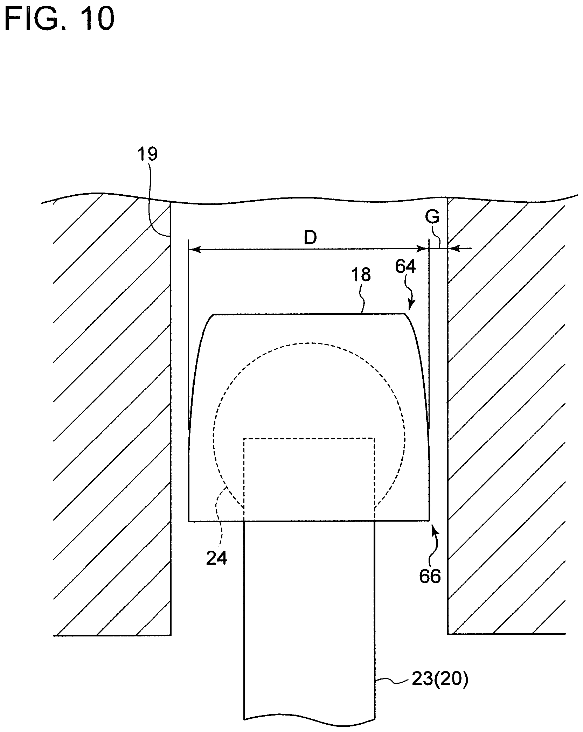

FIG. 10 is a diagram illustrating a positional relationship between the piston 18 and the cylinder 19 in the hydraulic motor 10 according to one embodiment. The piston 18 illustrated in FIG. 10 has the maximum outside diameter D, and there is the minimum gap G between the outer circumferential surface of the piston 18 and the inner circumferential surface of the cylinder 19.

In one embodiment, the maximum outside diameter D of the piston 18 and the minimum gap G satisfy a relationship represented by 0.001 ≤ G/D ≤ 0.003.

Working oil is directed from the working chamber 22 to the gap between the piston 18 and the cylinder 19 to act as lubricant oil, which makes it possible to prevent direct contact between the piston 18 and the cylinder 19. Further, when the minimum gap between the piston 18 and the cylinder 19 satisfies the above relationship, it is possible to prevent contact between the piston 18 and the wall surface of the cylinder 19 even if the piston 18 expands due to heat during operation of the hydraulic motor 10 (hydraulic machine). In this way, it is possible to prevent damage to the piston 18 or the wall surface of the cylinder 19 due to contact.

The outer circumferential surface of the piston 18 illustrated in FIG. 10 is formed by a surface having a crowned form from an end portion 64 on the side of the working chamber 22 to an end portion 66 on the side of the eccentric cam 17. Specifically, the piston 18 is formed so that the outside diameter of the piston 18 increases gradually from the end portion 64 on the side of the working chamber 22 to the end portion 66 on the side of the eccentric cam 17.

In this case, even if the piston 18 tilts in accordance with the tilt of the connecting rod 20, it is possible to reduce the risk that the outer circumferential surface of the piston 18 contacts the wall surface of the cylinder 19. In this way, it is possible to prevent damage to the piston 18 or the wall surface of the cylinder 19 due to contact.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corner portions within the range in which the same effect can be achieved.

On the other hand, an expression such as "comprise", "include", "have", "contain" and "constitute" are not intended to be exclusive of other components.

## Claims

1. A hydraulic machine (10) comprising:
a rotation shaft (15);
a cam (17) configured to rotate with the rotation shaft (15) ;
a cylinder (19) disposed radially inside or outside the rotation shaft (15);
a piston (18) configured to be reciprocable in the cylinder (19) along a radial direction of the rotation shaft (15) in conjunction with rotational motion of the cam (17);
a connecting rod (20) including a first end portion (51) connected swingably to the piston (18) and a second end portion (52) disposed opposite to the first end portion (51);
a hydrostatic pad (25) disposed on the second end portion (52) of the connecting rod (20), the hydrostatic pad (25) including a sliding surface (27) facing an outer surface of the cam (17); and
a lubricant-fluid supply channel (28) disposed on the hydrostatic pad (25), for supplying a lubricant fluid to the sliding surface (27) of the hydrostatic pad (25),
wherein the hydraulic machine (10) is configured so that a pressure in a working chamber (22) formed by the piston (18) and the cylinder (19) changes cyclically and alternately between a first pressure P₁ and a second pressure P₂ larger than the first pressure P₁, in accordance with the reciprocating
motion of the piston (18), and
wherein the hydrostatic pad (25) is configured to retain a liquid film of the lubricant fluid between the sliding surface (27) and the outer surface of the cam (17),
**characterized in that**
the hydrostatic pad (25) is configured to retain the liquid film of the lubricant fluid having a thickness of d or more between the sliding surface (27) and the outer surface of the cam (17) at least when the pressure in the working chamber (22) is the second pressure P₂,
wherein d is determined to correspond to an amount of deformation of the hydrostatic pad (25) at the time when the pressure in the working chamber (22) is the second pressure P₂.

2. The hydraulic machine (10) according to claim 1, wherein the sliding surface (27) of the hydrostatic pad (25) has a substantially rectangular shape in a planar view.

3. The hydraulic machine (10) according to claim 1 or 2,
wherein the lubricant-fluid supply channel (28) includes a first inner channel (28A) disposed inside the piston (18) and being in communication with the working chamber (22) and a second inner channel (28B) disposed inside the connecting rod (20) and the hydrostatic pad (25) and being in communication with the first inner channel (28A) and the sliding surface (27).

4. The hydraulic machine (10) according to any one of claims 1 to 3, further comprising at least one orifice (30) disposed in the lubricant-fluid supply channel (28).

5. The hydraulic machine (10) according to any one of claims 1 to 4, wherein the hydrostatic pad (25) includes a hydrostatic pocket (32;32A,32B) disposed on the sliding surface (27) and configured to store the lubricant fluid.

6. The hydraulic machine (10) according to claim 5, wherein a width of the hydrostatic pad (25) in an axial direction of the rotation shaft (15) is constant at least in an extending region of the hydrostatic pocket (32;32A,32B) in a circumferential direction of the rotation shaft (15).

7. The hydraulic machine (10) according to claim 5 or 6,
wherein a relationship represented by W_{pad}/Wₚₒₖₑₜ ≥ 1.5 is satisfied, where W_{pad} is a width of the hydrostatic pad (25) in the circumferential direction of the rotation shaft (15), and W_{pocket} is a width of the hydrostatic pocket (32; 32A, 32B) in the circumferential direction.

8. The hydraulic machine (10) according to any one of claims 5 to 7,
wherein the hydrostatic pocket (32) is disposed in the middle of the sliding surface (27), and
wherein an area S₁ of the sliding surface (27) excluding an area occupied by the hydrostatic pocket (32) is equal to or greater than an area S₂ of the hydrostatic pocket (32).

9. The hydraulic machine (10) according to any one of claims 5 to 8,
wherein the hydrostatic pocket (32) is formed so that a depth of the hydrostatic pocket (32;32A,32B) changes in a stepped pattern along the rotational direction of the cam (17) .

10. The hydraulic machine (10) according to any one of claims 1 to 9,
wherein a relationship represented by 0.001 ≤ G/D ≤ 0.003 is satisfied, where D is a maximum outside diameter of the piston (18) and G is a minimum gap between an outer circumferential surface of the piston (18) and an inner circumferential surface of the cylinder (19) in a radial direction of the cylinder (19).

11. The hydraulic machine (10) according to any one of claims 1 to 10,
wherein the outer circumferential surface of the piston (18) has a surface having a crowned form from an end portion on the side of the working chamber (22) to an end portion on the side of the cam (17).

12. The hydraulic machine (10) according to any one of claims 1 to 11,
wherein one of the piston (18) or the connecting rod (20) includes a ball-shaped end portion (24),
wherein the other one of the piston (18) or the connecting rod (20) includes a ball-shaped recess portion (29) engageable with the ball-shaped end portion (24), and
wherein a surface of at least one of the ball-shaped end portion (24) or the ball-shaped recess portion (29) is covered with a solid lubricant (54).

13. A power generating apparatus (1) of a renewable energy type, comprising:
a rotor (3) configured to receive renewable energy to rotate;
a hydraulic pump (8) configured be driven by the rotor (3) to pressurize a working oil;
a hydraulic motor (10) configured to be driven by the working oil; and
a generator (16) configured to be driven by the hydraulic motor (10),
wherein at least one of the hydraulic pump (8) or the hydraulic motor (10) comprises the hydraulic machine according to any one of claims 1 to 12.

14. The power generating apparatus (1) of a renewable energy
type according to claim 13, which is a wind turbine power generating apparatus configured to generate electric power utilizing wind energy as the renewable energy.

## Patentansprüche

1. Eine hydraulische Maschine (10), umfassend:
eine Rotationswelle (15),
einen Nocken (17), der konfiguriert ist, um sich mit der Rotationswelle (15) zu drehen,
einen Zylinder (19), der radial innerhalb oder außerhalb der Rotationswelle (15) angeordnet ist,
einen Kolben (18), der konfiguriert ist, um in dem Zylinder (19) entlang einer radialen Richtung der Rotationswelle (15) in Verbindung mit der Drehbewegung des Nockens (17) hin- und herbewegt zu werden,
eine Verbindungsstange (20) mit einem ersten Endabschnitt (51), der schwenkbar mit dem Kolben (18) verbunden ist, und einem zweiten Endabschnitt (52), der entgegengesetzt zu dem ersten Endabschnitt (51) angeordnet ist,
ein hydrostatisches Kissen (25), das an dem zweiten Endabschnitt (52) der Verbindungsstange (20) angeordnet ist, wobei das hydrostatische Kissen (25) eine Gleitoberfläche (27) aufweist, die einer Außenoberfläche des Nockens (17) gegenüberliegt, und
einen Schmiermittelfluid-Zufuhrkanal (28), der an dem hydrostatischen Kissen (25) angeordnet ist, um der Gleitoberfläche (27) des hydrostatischen Kissens (25) ein Schmiermittelfluid zuzuführen,
wobei die hydraulische Maschine (10) so konfiguriert ist, dass ein Druck in einer durch den Kolben (18) und den Zylinder (19) gebildeten Arbeitskammer (22) zyklisch und abwechselnd zwischen einem ersten Druck P₁ und einem zweiten Druck P₂, der größer als der erste Druck P₁ ist, in Übereinstimmung mit der Hin- und Herbewegung des Kolbens (18) wechselt, und
wobei das hydrostatische Kissen (25) konfiguriert ist, um einen Flüssigkeitsfilm des Schmiermittelfluids zwischen der Gleitoberfläche (27) und der Außenoberfläche des Nockens (17) zu halten,
**dadurch gekennzeichnet, dass**
das hydrostatische Kissen (25) konfiguriert ist, um den Flüssigkeitsfilm des Schmiermittelfluids mit einer Dicke von d oder mehr zwischen der Gleitoberfläche (27) und der Außenoberfläche des Nockens (17) zu halten, zumindest wenn der Druck in der Arbeitskammer (22) der zweite Druck P₂ ist, wobei d so bestimmt ist, dass es einem Betrag der Verformung des hydrostatischen Kissens (25) zu dem Zeitpunkt entspricht, wenn der Druck in der Arbeitskammer (22) der zweite Druck P₂ ist.

2. Die hydraulische Maschine (10) nach Anspruch 1, wobei die Gleitoberfläche (27) des hydrostatischen Kissens (25) in der Draufsicht eine im Wesentlichen rechteckige Form aufweist.

3. Die hydraulische Maschine (10) nach Anspruch 1 oder 2,
wobei der Schmiermittelfluid-Zuführkanal (28) einen ersten inneren Kanal (28A), der innerhalb des Kolbens (18) angeordnet ist und mit der Arbeitskammer (22) in Verbindung steht, und einen zweiten inneren Kanal (28B) aufweist, der innerhalb der Verbindungsstange (20) und des hydrostatischen Kissens (25) angeordnet ist und mit dem ersten inneren Kanal (28A) und der Gleitoberfläche (27) in Verbindung steht.

4. Die hydraulische Maschine (10) nach einem der Ansprüche 1 bis 3, die ferner mindestens eine Öffnung (30) aufweist, die in dem Schmiermittelfluid-Zuführkanal (28) angeordnet ist.

5. Die hydraulische Maschine (10) nach einem der Ansprüche 1 bis 4, wobei das hydrostatische Kissen (25) eine hydrostatische Tasche (32;32A,32B) aufweist, die an der Gleitoberfläche (27) angeordnet und zum Speichern des Schmiermittelfluids konfiguriert ist.

6. Die hydraulische Maschine (10) nach Anspruch 5, wobei eine Breite des hydrostatischen Kissens (25) in einer axialen Richtung der Rotationswelle (15) zumindest in einem Erstreckungsbereich der hydrostatischen Tasche (32;32A,32B) in einer Umfangsrichtung der Rotationswelle (15) konstant ist.

7. Die hydraulische Maschine (10) nach Anspruch 5 oder 6,
wobei eine Beziehung, die durch W_{pad}/Wₚₒₖₑₜ ≥ 1,5 dargestellt ist, erfüllt ist, wobei W_{pad} eine Breite des hydrostatischen Kissens (25) in der Umfangsrichtung der Rotationswelle (15) ist und W_{pocket} eine Breite der hydrostatischen Tasche (32;32A,32B) in der Umfangsrichtung ist.

8. Die hydraulische Maschine (10) nach einem der Ansprüche 5 bis 7,
wobei die hydrostatische Tasche (32) in der Mitte der Gleitoberfläche (27) angeordnet ist, und
wobei eine Fläche S₁ der Gleitoberfläche (27) ohne eine von der hydrostatischen Tasche (32) eingenommene Fläche gleich oder größer ist als eine Fläche S₂ der hydrostatischen Tasche (32).

9. Die hydraulische Maschine (10) nach einem der Ansprüche 5 bis 8,
wobei die hydrostatische Tasche (32) so ausgebildet ist, dass sich eine Tiefe der hydrostatischen Tasche (32;32A,32B) in einem gestuften Muster entlang der Drehrichtung des Nockens (17) ändert.

10. Die hydraulische Maschine (10) nach einem der Ansprüche 1 bis 9,
wobei eine Beziehung, die durch 0,001 ≤ G/D ≤ 0,003 dargestellt ist, erfüllt ist, wobei D ein maximaler Außendurchmesser des Kolbens (18) ist und G ein minimaler Spalt zwischen einer äußeren Umfangsoberfläche des Kolbens (18) und einer inneren Umfangsoberfläche des Zylinders (19) in einer radialen Richtung des Zylinders (19) ist.

11. Die hydraulische Maschine (10) nach einem der Ansprüche 1 bis 10,
wobei die äußere Umfangsoberfläche des Kolbens (18) eine Oberfläche aufweist, die von einem Endabschnitt an der Seite der Arbeitskammer (22) bis zu einem Endabschnitt an der Seite des Nockens (17) eine ballige Form hat.

12. Die hydraulische Maschine (10) nach einem der Ansprüche 1 bis 11,
wobei einer der Kolben (18) oder die Verbindungsstange (20) einen kugelförmigen Endabschnitt (24) aufweist,
wobei der andere des Kolbens (18) oder der Verbindungsstange (20) einen kugelförmigen Ausnehmungsabschnitt (29) aufweist, der mit dem kugelförmigen Endabschnitt (24) in Eingriff gebracht werden kann, und
wobei eine Oberfläche von mindestens einem von dem kugelförmigen Endabschnitt (24) oder dem kugelförmigen Ausnehmungsabschnitt (29) mit einem festen Schmiermittel (54) bedeckt ist.

13. Eine Stromerzeugungsvorrichtung (1) vom erneuerbare Energietyp, umfassend:
einen Rotor (3), der konfiguriert ist, um erneuerbare Energie zu empfangen, um sich zu drehen,
eine Hydraulikpumpe (8), die konfiguriert ist, um von dem Rotor (3) angetrieben zu werden, um ein Arbeitsöl unter Druck zu setzen,
einen Hydraulikmotor (10), der konfiguriert ist, um durch das Arbeitsöl angetrieben zu werden, und
einen Generator (16), der konfiguriert ist, um von dem Hydraulikmotor (10) angetrieben zu werden,
wobei mindestens eine von der Hydraulikpumpe (8) oder dem Hydraulikmotor (10) die hydraulische Maschine nach einem der Ansprüche 1 bis 12 umfasst.

14. Die Stromerzeugungsvorrichtung (1) vom erneuerbare Energietyp nach Anspruch 13, die eine Windturbinenstromerzeugungsvorrichtung ist, die konfiguriert ist, um elektrischen Strom unter Verwendung von Windenergie als erneuerbare Energie zu erzeugen.

## Revendications

1. Machine (10) hydraulique comprenant :
un arbre (15) de rotation ;
une came (17) configurée pour tourner avec l'arbre (15) de rotation ;
un cylindre (19) disposé radialement à l'intérieur ou à l'extérieur de l'arbre (15) de rotation ;
un piston (18) configuré pour aller et venir dans le cylindre (19) suivant une direction radiale de l'arbre (15) de rotation en conjonction avec un mouvement de rotation de la came (17) ;
une barre (20) de liaison, ayant un premier tronçon (51) d'extrémité relié de manière pivotante au piston (18) et un deuxième tronçon (52) d'extrémité disposé à l'opposé du premier tronçon (51) d'extrémité ;
un patin (25) hydrostatique, disposé sur le deuxième tronçon (27) d'extrémité de la barre (20) de liaison, le patin (25) hydrostatique ayant une surface (27) de glissement faisant face à une surface extérieure de la came (17) ;
un conduit (28) d'alimentation en fluide lubrifiant, disposé sur le patin (27) hydrostatique pour alimenter en fluide lubrifiant la surface (27) de glissement du patin (27) hydrostatique,
dans laquelle la machine (10) hydraulique est configurée de manière à ce qu'une pression dans une chambre (22) de travail formée par le piston (18) et le cylindre (19) change cycliquement et alternativement entre une première pression (P1) et une deuxième pression (P2) plus grande que la première pression (P1) en fonction du mouvement de va-et-vient du piston (18) et
dans laquelle le patin (25) hydrostatique est configuré pour retenir une pellicule de liquide du fluide lubrifiant entre la surface (27) de glissement et la surface extérieure de la came (17),
**caractérisée en ce que**
le patin (27) hydrostatique est configuré pour retenir la pellicule liquide du fluide lubrifiant d'une épaisseur de d ou plus entre la surface (27) de glissement et la surface extérieure de la came (17) au moins lorsque la pression dans la chambre (22) de travail est la deuxième pression P₂,
dans laquelle d est déterminée de manière à correspondre à une quantité de déformation du patin (25) hydrostatique au moment où la pression dans la chambre (22) de travail est la deuxième pression P₂.

2. Machine (10) hydraulique suivant la revendication 1, dans laquelle la surface (27) de glissement du patin (25) hydrostatique a, dans une vue en plan, une forme sensiblement rectangulaire.

3. Machine (10) hydraulique suivant la revendication 1 ou 2, dans laquelle le conduit (28) d'alimentation en fluide lubrifiant a un premier conduit (28a) intérieur, disposé à l'intérieur du piston (18) et en communication avec la chambre (22) de travail, et un deuxième conduit (28b) intérieur, disposé à l'intérieur de la barre (20) de liaison et du patin (25) hydrostatique et en communication avec le premier conduit (28a) intérieur et la surface (27) de glissement.

4. Machine (10) hydraulique suivant l'une quelconque des revendications 1 à 3,
comprenant en outre au moins un orifice (30) disposé dans le conduit (28) d'alimentation en fluide lubrifiant.

5. Machine (10) hydraulique suivant l'une quelconque des revendications 1 à 4, dans lequel le patin (25) hydrostatique a une poche (32 ; 32A, 32B) hydrostatique, disposée sur la surface (27) de glissement et configurée pour emmagasiner le fluide lubrifiant.

6. Machine (10) hydraulique suivant la revendication 5, dans laquelle une largeur du patin (25) hydrostatique dans une direction axiale de l'arbre (15) de rotation est constante, au moins dans une région d'extension de la poche (32 ; 32A, 32B) hydrostatique dans une direction circonférentielle de l'arbre (15) de rotation.

7. Machine (10) hydraulique suivant la revendication 5 ou 6,
dans laquelle une relation représentée par W_{pad}/Wₚₒₖₑₜ ≥ 1,5 est satisfaite, W_{pad} étant une largeur du patin (25) hydrostatique dans la direction circonférentielle de l'arbre (15) de rotation et Wₚₒₖₑₜ étant une largeur de la poche (32 ; 32A, 32B) hydrostatique dans la direction circonférentielle.

8. Machine (10) hydraulique suivant l'une quelconque des revendications 5 à 7,
dans laquelle la poche (32) hydrostatique est disposée au milieu de la surface (27) de glissement et
dans laquelle une superficie S₁ de la surface (27) de glissement, à l'exception d'une région occupée par la poche (32) hydrostatique, est supérieure ou égale à une superficie S₂ de la poche (32) hydrostatique.

9. Machine (10) hydraulique suivant l'une quelconque des revendications 1 à 9,
dans laquelle la poche (32) hydrostatique est formée de manière à ce qu'une profondeur de la poche (32 ; 32A, 32B) hydrostatique change suivant une configuration étagée dans la direction de rotation de la came (17).

10. Machine (10) hydraulique suivant l'une quelconque des revendications 1 à 9,
dans laquelle une relation représentée par 0,001 ≤ G/D ≤ 0,003 est satisfaite, D étant un diamètre extérieur maximum du piston (18) et G étant un intervalle minimum entre une surface circonférentielle extérieure du piston (18) et une surface circonférentielle intérieure du cylindre (19) dans une direction radiale du cylindre (19).

11. Machine (10) hydraulique suivant l'une quelconque des revendications 1 à 10,
dans laquelle la surface circonférentielle extérieure du piston (18) a une surface ayant une forme en couronne d'une partie d'extrémité du côté de la chambre (22) de travail à une partie d'extrémité du côté de la came (17).

12. Machine (10) hydraulique suivant l'une quelconque des revendications 1 à 11,
dans laquelle l'un du piston (18) ou de la barre (20) de liaison a une partie (24) d'extrémité en forme de boule,
dans laquelle l'autre du piston (18) ou de la barre (20) de liaison a une partie (29) de cavité en forme de boule, dans laquelle la partie (24) d'extrémité en forme de boule peut pénétrer, et
dans laquelle une surface d'au moins l'une des parties (24) d'extrémité en forme de boule ou de la partie (29) de cavité en forme de boule est revêtue d'un lubrifiant (54) solide.

13. Installation (1) de production d'électricité d'un type à énergie renouvelable, comprenant :
un rotor (3) configuré pour recevoir de l'énergie renouvelable afin de tourner ;
une pompe (8) hydraulique configurée pour être entraînée par le rotor (3) pour mettre une huile de travail sous pression ;
un moteur (10) hydraulique configuré pour être entraîné par l'huile de travail ;
un générateur (16) configuré pour être entraîné par le moteur (10) hydraulique,
dans laquelle au moins l'un de la pompe (8) hydraulique ou du moteur (10) hydraulique comprend la machine hydraulique suivant l'une quelconque des revendications 1 à 12.

14. Installation (1) de production d'électricité d'un type à énergie renouvelable, suivant la revendication 13, qui est une installation de production d'électricité par éolienne, configurée pour produire de l'électricité en utilisant l'énergie du vent comme énergie renouvelable.
